# DEMANDE DE BREVET EUROPEEN

(11) **EP 4 484 294 A1**
(43) Date de publication de la demande: **01.01.2025**
(21) Numéro de dépôt: 24183254.2
(22) Date de dépôt: 20.06.2024
(51) Int. Cl.: B64D 15/12, B64D 15/16

(54) **PROCÉDÉ DE DÉGIVRAGE D' UNE PAROI AÉRODYNAMIQUE UTILISANT AU MOINS DEUX SYSTÈMES DE DÉGIVRAGE DIFFÉRENTS, AÉRONEF ÉQUIPÉ D' UN DISPOSITIF DE DÉGIVRAGE PERMETTANT DE METTRE EN OEUVRE LEDIT PROCÉDÉ**

(30) Priorité: 28.06.2023 FR 2306750
(71) Demandeur: AIRBUS OPERATIONS (S.A.S.), 31060 Toulouse (FR)
(72) Inventeur: CREBASSOL, Florent, 31060 TOULOUSE (FR)
(74) Mandataire: Fantin, Laurent

(57) **Abrégé**

L'invention a pour objet un procédé de dégivrage d'une paroi aérodynamique (32) d'un aéronef, ledit procédé comprenant une étape d'activation d'un système de dégivrage (70) thermique configuré pour générer au moins un échauffement localisé au niveau de la face extérieure (F32) de la paroi aérodynamique (32) et une étape d'activation d'un autre système de dégivrage (68) par déformation élastique configuré pour déformer la paroi aérodynamique (32). En présence d'un amas de glace sur la paroi aérodynamique (32), le fait d'activer le système de dégivrage (70) thermique permet d'affaiblir l'amas de glace en le segmentant en plusieurs petits blocs, ce qui contribue à renforcer l'efficacité du système de dégivrage par déformation élastique.

L'invention a également pour objet un aéronef équipé d'un dispositif de dégivrage permettant de mettre en oeuvre ledit procédé.

## Description

La présente demande se rapporte à un procédé de dégivrage d'une paroi utilisant au moins deux systèmes de dégivrage différents ainsi qu'à un aéronef équipé d'un dispositif de dégivrage permettant de mettre en oeuvre ledit procédé.

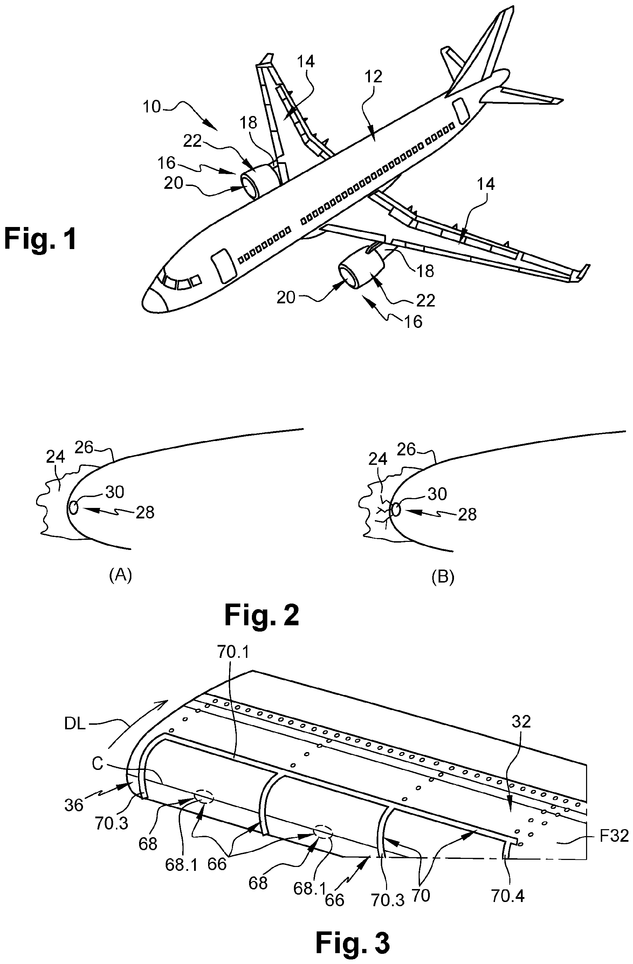

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières par des mâts 18. Chaque ensemble de propulsion 16 comprend une motorisation 20 ainsi qu'une nacelle 22 positionnée autour de la motorisation 20.

En fonction des conditions climatiques et des phases de vol, des amas de glace 24 peuvent se former sur certaines parois aérodynamiques 26 de l'aéronef, comme les bords d'attaque. Pour optimiser les conditions de vol, ces éventuels amas de glace doivent être retirés ou la formation de tels amas doit être limitée ou empêchée. A cet effet, les parois aérodynamiques 26 propices à la formation de givre ou de glace peuvent comprendre un système de dégivrage 28, comme illustré sur la figure 2.

Pour la présente demande, on entend par glace indifféremment du givre ou de la glace, et par dégivrage un traitement visant à limiter ou empêcher la formation de givre et/ou de glace et/ou à décoller le givre et/ou la glace d'une surface.

Selon un mode de réalisation, le système de dégivrage est de type électrique et comprend au moins un tapis résistif appliqué contre la face intérieure de la paroi aérodynamique à traiter et recouvrant toute la zone à traiter ainsi qu'un générateur de courant relié au tapis résistif. En circulant dans le tapis résistif, le courant électrique génère un échauffement par effet Joule qui empêche ou limite la formation de glace. En présence d'amas de glace, un système de dégivrage de type électrique permet de décoller l'amas de glace de la paroi aérodynamique. Un système de dégivrage de type électrique comprenant des tapis résistifs consomme une énergie électrique qui est notamment fonction de la superficie recouverte par le tapis résistif, de la durée d'activation et de la puissance par unité de surface du tapis résistif. Dans la mesure où le tapis résistif s'étend de manière continue sur toute la superficie de la zone à traiter et que la durée d'activation est relativement longue, les tapis résistifs ont pour inconvénient d'être énergivores.

Selon un autre mode de réalisation visible sur la figure 2, le système de dégivrage 28 est de type mécanique et comprend au moins un générateur de vibrations 30, comme un élément piézoélectrique, positionné contre la face intérieure de la paroi aérodynamique 26. Lorsqu'un amas de glace 24 se forme sur la surface extérieure de la paroi aérodynamique 26 comme illustré sur la partie (A) de la figure 2, le générateur de vibrations 30 est activé comme illustré sur la partie (B) de la figure 2. Lorsque le générateur de vibrations 30 est activé, les vibrations produites par le générateur de vibrations 30 se propagent à travers la paroi aérodynamique 26 et dans l'amas de glace 24 qui se fissure et se détache. En fonction des caractéristiques de l'amas de glace 24 et notamment de son épaisseur, il est nécessaire de rapprocher les générateurs de vibrations 30 et donc d'augmenter leur nombre, ce qui se traduit par une augmentation de la masse embarquée et de la consommation énergétique.

La présente invention vise à remédier à tout ou partie des inconvénients de l'art antérieur.

A cet effet, l'invention a pour objet un procédé de dégivrage d'une paroi aérodynamique d'un aéronef, ladite paroi aérodynamique présentant une face extérieure contre laquelle peut s'écouler un flux d'air selon une direction longitudinale ainsi qu'une face intérieure opposée à la face extérieure.

Selon l'invention, le procédé utilise au moins un premier système de dégivrage configuré pour occuper un état activé dans lequel le premier système de dégivrage génère au moins une déformation élastique de la paroi aérodynamique ainsi qu'au moins un deuxième système de dégivrage, différent du premier système de dégivrage, configuré pour occuper un état activé dans lequel le deuxième système de dégivrage génère au moins un échauffement localisé au niveau de la face extérieure de la paroi aérodynamique, le procédé de dégivrage comprenant une étape d'activation du deuxième système de dégivrage et une étape d'activation du premier système de dégivrage.

En présence d'un amas de glace sur la paroi aérodynamique, le fait d'activer le deuxième système de dégivrage permet d'affaiblir l'amas de glace en le segmentant en plusieurs petits blocs, ce qui contribue à renforcer l'efficacité du premier système de dégivrage. Cette solution contribue à réduire la consommation énergétique du dispositif de dégivrage, chacun des premier et deuxième systèmes de dégivrage fonctionnant de manière optimisée.

Selon une autre caractéristique, l'étape d'activation du premier système de dégivrage est décalée dans le temps d'une durée d'au moins 2 secondes par rapport à l'étape d'activation du deuxième système de dégivrage.

Selon une autre caractéristique, l'étape d'activation du deuxième système de dégivrage est concomitante à l'étape d'activation du premier système de dégivrage.

Selon une autre caractéristique, le procédé de dégivrage comprend une étape de désactivation du deuxième système de dégivrage concomitante à l'étape d'activation du premier système de dégivrage.

L'invention a également pour objet un aéronef comprenant une paroi aérodynamique ainsi qu'un dispositif de dégivrage pour traiter ladite paroi aérodynamique, cette dernière présentant une face extérieure contre laquelle peut s'écouler un flux d'air selon une direction longitudinale ainsi qu'une face intérieure opposée à la face extérieure, le dispositif de dégivrage comprenant au moins un premier système de dégivrage configuré pour générer au moins une déformation élastique de ladite paroi aérodynamique.

Selon l'invention, le dispositif de dégivrage comprend au moins un deuxième système de dégivrage, différent du premier système de dégivrage, configuré pour générer un échauffement localisé au niveau de la face extérieure de la paroi aérodynamique.

Selon une autre caractéristique, le deuxième système de dégivrage est discontinu et décalé sur la paroi aérodynamique par rapport au premier système de dégivrage.

Selon une autre caractéristique, le deuxième système de dégivrage comprend plusieurs éléments longilignes chauffants positionnés au niveau de la face extérieure de la paroi aérodynamique ou à proximité de cette dernière.

Selon une autre caractéristique, le deuxième système de dégivrage comprend des premiers éléments longilignes chauffants orientés selon au moins une première direction sensiblement perpendiculaire à la direction longitudinale du flux d'air.

Selon une autre caractéristique, le deuxième système de dégivrage comprend des deuxièmes éléments longilignes chauffants orientés selon au moins une deuxième direction sécante à la première direction, les premiers et deuxièmes éléments longilignes chauffants étant sécants. Selon une autre caractéristique, la deuxième direction est sensiblement perpendiculaire à la première direction.

Selon une autre caractéristique, les éléments longilignes chauffants présentent chacun une largeur donnée et sont espacés entre eux d'une distance supérieure à 5 fois la largeur donnée. Selon une autre caractéristique, le premier système de dégivrage comprend plusieurs générateurs de déformation élastique positionnés chacun entre au moins deux éléments longilignes chauffants.

Selon une autre caractéristique, chaque générateur de déformation élastique est positionné entre deux premiers éléments longilignes chauffants orientés selon une première direction et entre deux deuxièmes éléments longilignes chauffants orientés selon une deuxième direction sécante à la première direction.

Selon une autre caractéristique, l'aéronef comprend au moins un bord d'attaque présentant une ligne de crête, le premier système de dégivrage comprenant plusieurs générateurs de déformation élastique répartis le long de la ligne de crête, le deuxième système de dégivrage comprenant au moins deux premiers éléments longilignes chauffants orientés selon au moins une première direction, sensiblement perpendiculaire à la direction longitudinale du flux d'air, et positionnés de part et d'autre de la ligne de crête.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une coupe transversale schématique d'une paroi d'aéronef équipée d'un système de dégivrage de type mécanique, à l'état désactivé sur la partie (A) et à l'état activé sur la partie (B), illustrant un mode de réalisation de l'art antérieur,
- La figure 3 est une vue en perspective d'une partie d'un bord d'attaque d'aéronef équipé d'un dispositif de dégivrage illustrant un mode de réalisation de l'invention,
- La figure 4 est une coupe transversale schématique d'une paroi d'aéronef équipée d'un système de dégivrage de type mécanique, à l'état désactivé sur la partie (A) et à l'état activé sur la partie (B), illustrant un mode de réalisation de l'invention,
- La figure 5 est une vue en perspective d'un ensemble de propulsion d'un aéronef illustrant un mode de réalisation de l'invention,
- La figure 6 est une coupe longitudinale d'une partie de l'ensemble de propulsion visible sur la figure 5,
- La figure 7 est une coupe longitudinale d'un panneau d'atténuation acoustique équipé d'un dispositif de dégivrage illustrant un mode de réalisation de l'invention.

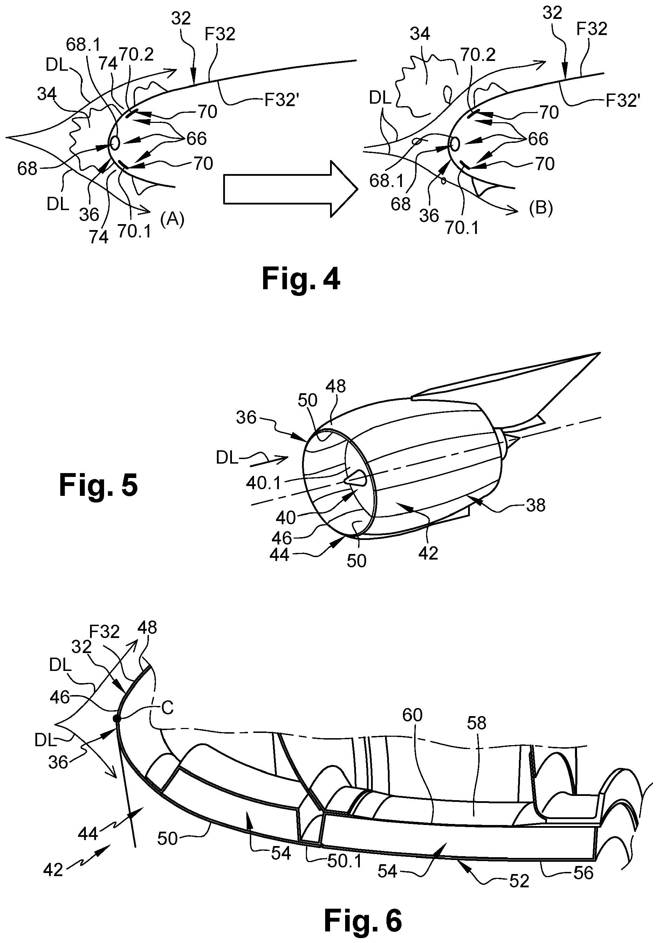

Selon des modes de réalisation visibles sur les figures 3, 4 et 7, une paroi aérodynamique 32 d'un aéronef présente une face extérieure F32 contre laquelle peut s'écouler un flux d'air lorsque l'aéronef est en vol et sur laquelle peut se former de la glace, notamment un amas de glace 34 (visible sur la figure 4) ainsi qu'une face intérieure F32' opposée à la face extérieure F32. Le flux d'air s'écoule selon une direction longitudinale DL. Un plan transversal est perpendiculaire à la direction longitudinale. Une direction transversale est perpendiculaire à la direction longitudinale et parallèle à la face extérieure F32.

Selon une application visible sur la figure 3, la paroi aérodynamique 32 forme au moins une partie d'un bord d'attaque 36 d'une aile d'un aéronef.

Selon un mode de réalisation visible sur les figures 5 et 6, un ensemble de propulsion 38 comprend une motorisation 40 ainsi qu'une nacelle 42 positionnée autour de la motorisation 40. La nacelle 42 comprend, à l'avant, une entrée d'air 44 configurée pour canaliser un flux d'air en direction de la motorisation 40 et notamment d'une soufflante 40.1 de la motorisation 40. Cette entrée d'air 44 comprend une lèvre 46 qui forme un bord d'attaque circulaire, une paroi extérieure 48 prolongeant la lèvre 46 vers l'extérieur de la nacelle 42 ainsi qu'un conduit intérieur 50 prolongeant la lèvre 46 vers l'intérieur de la nacelle 42. Ce conduit intérieur 50 comprend un bord arrière 50.1 relié à un carter de soufflante 52 positionné autour de la soufflante 40.1 de la motorisation 40.

Selon une application, la paroi aérodynamique 32 forme au moins une partie de l'entrée d'air 44 d'une nacelle d'aéronef.

Bien entendu, l'invention n'est pas limitée à ces applications. Ainsi, la paroi aérodynamique peut être positionnée à différents endroits d'un aéronef.

Selon un mode de réalisation, la paroi aérodynamique 32 se présente sous la forme d'une tôle ou d'une plaque continue et pleine entre les faces extérieure et intérieure F32, F32'.

Selon un autre mode de réalisation, la paroi aérodynamique 32 se présente sous la forme d'un panneau d'atténuation acoustique 54 positionné au niveau de la lèvre 46 et/ou du conduit intérieur 50 de l'entrée d'air 44 d'une nacelle 42 d'aéronef. Ce panneau d'atténuation acoustique 54 comprend, de la face extérieure F32 vers la face intérieure F32', une structure acoustiquement résistive 56 dont une surface forme la face extérieure F32, au moins une structure alvéolaire 58 ainsi qu'une couche réflectrice 60 dont une face forme la face intérieure F32'.

La couche réflectrice 60 comprend au moins une plaque fine, métallique ou en matériau composite, imperméable aux ondes sonores. La structure alvéolaire 58 peut être métallique ou en matériau composite.

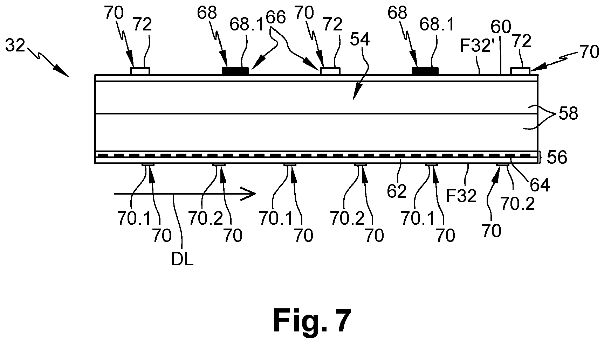

Selon un mode de réalisation visible sur la figure 7, la structure acoustiquement résistive 56 comprend au moins une couche poreuse 62 en matériau composite traversée par des orifices et configurée en fonction des caractéristiques acoustiques recherchées pour le panneau d'atténuation acoustique 54. En complément, la structure acoustiquement résistive 56 peut comprendre au moins un enroulement 64 en matériau composite, positionné entre la structure alvéolaire 58 et la couche poreuse 62. La structure acoustiquement résistive 56 peut également comprendre au moins une couche de protection contre la foudre sous la forme d'un treillis ou d'un grillage métallique.

Selon un autre mode de réalisation, la structure acoustiquement résistive 56 comprend au moins une couche poreuse métallique traversée par des orifices et configurée en fonction des caractéristiques acoustiques recherchées pour le panneau d'atténuation acoustique.

Bien entendu, l'invention n'est pas limitée à ces modes de réalisation pour la paroi aérodynamique 32.

Selon un mode de réalisation, un aéronef comprend une paroi aérodynamique 32 ainsi qu'un dispositif de dégivrage 66 pour traiter ladite paroi aérodynamique 32, qui comprend au moins un premier système de dégivrage 68 par déformation élastique de la paroi aérodynamique 32 ainsi qu'au moins un deuxième système de dégivrage 70 configuré pour agir localement au niveau de la face extérieure F32 de la paroi aérodynamique 32 de manière à affaiblir localement l'amas de glace 34.

Le premier système de dégivrage 68 est configuré pour générer une déformation élastique de la paroi aérodynamique 32 à partir d'une zone ponctuelle (localisée et réduite) et comprend au moins un générateur de déformation élastique 68.1 configuré pour générer un choc, une onde, des vibrations ou un faible déplacement et le ou les transmettre à la paroi aérodynamique 32 de manière localisée.

Selon un mode de réalisation, le premier système de dégivrage 68 est de type mécanique et comprend au moins un générateur de vibrations 68.1 accouplé à la paroi aérodynamique 32 et configuré pour transformer une énergie électrique en énergie vibratoire ainsi qu'au moins une alimentation électrique configurée pour alimenter en énergie électrique le générateur de vibrations 68.1. Chaque générateur de vibrations 68.1 est un élément ponctuel recouvrant une faible zone de la paroi aérodynamique 32. A titre d'exemple, chaque générateur de vibrations 68.1 est un élément piézoélectrique.

Selon une configuration, le premier système de dégivrage 68 comprend plusieurs générateurs de vibrations 68.1 répartis sur la paroi aérodynamique 32. Selon un agencement, chaque générateur de vibrations 68 est positionné contre la face intérieure F32'. Bien entendu, l'invention n'est pas limitée à cet agencement. Dans le cas d'un panneau d'atténuation acoustique 54, le (ou les) générateur(s) de vibrations 68.1 pourrai(en)t être intégré(s) dans le panneau d'atténuation acoustique 54, notamment dans sa structure alvéolaire 58.

Le premier système de dégivrage 68 est configuré pour occuper un état désactivé dans lequel il ne génère aucune déformation élastique et un état activé dans lequel il génère au moins une déformation élastique de la paroi aérodynamique 32. Dans le cas d'un premier système de dégivrage 68 de type mécanique, il est configuré pour occuper un état désactivé dans lequel le (ou les) générateur(s) de vibrations 68.1 ne génère(nt) pas de vibrations et un état activé dans lequel le (ou les) générateur(s) de vibrations génère(nt) des vibrations. A cet effet, le premier système de dégivrage 68 comprend au moins une première commande configurée pour piloter un changement d'état parmi les états activé et désactivé. En variante, le premier système de dégivrage 68 peut être en permanence à l'état activé.

Selon un mode de réalisation, le deuxième système de dégivrage 70 est de type thermique et configuré pour générer un échauffement localisé au niveau de la face extérieure F32 de la paroi aérodynamique 32, ce qui permet d'affaiblir localement l'amas de glace 34 en réduisant localement son épaisseur et/ou en limitant localement l'adhérence de l'amas de glace 34 sur la paroi aérodynamique 32.

Selon une première variante, le deuxième système de dégivrage 70 est de type électrique et comprend plusieurs bandes en matériau conducteur électrique 70.1 à 70.4 positionnées au niveau de la face extérieure F32 de la paroi aérodynamique 32 ou à proximité de cette dernière. Chacune de ces bandes en matériau conducteur électrique 70.1 à 70.4 est configurée pour produire un échauffement lorsqu'elle est traversée par un courant électrique.

Selon une configuration, les bandes en matériau conducteur électrique 70.1 à 70.4 sont de type résistif . En complément, le système de dégivrage de type électrique 70 comprend au moins une alimentation électrique directement reliée aux bandes en matériau conducteur électrique 70.1 à 70.4.

Selon une autre configuration, les bandes en matériau conducteur électrique 70.1 à 70.4 sont de type inductif. En complément, le système de dégivrage de type électrique 70 comprend au moins un générateur de champs électromagnétiques 72 (comme une bobine électrique par exemple) positionné au niveau de la face intérieure F32' et alimenté par au moins une alimentation électrique, les bandes en matériau conducteur électrique 70.1 à 70.4 étant positionnées dans le champ électromagnétique produit par le générateur de champs électromagnétiques 72 et configurées pour générer un échauffement grâce à un phénomène d'induction.

Selon une deuxième variante, le deuxième système de dégivrage 70 est de type fluidique et comprend plusieurs conduits configurés pour véhiculer un fluide chaud, comme de l'air chaud prélevé au niveau de la motorisation de l'aéronef, positionnés au niveau de la paroi aérodynamique 32.

Quelle que soit la variante, le deuxième système de dégivrage 70 comprend des éléments longilignes chauffants 70.1 à 70.4, à savoir des bandes en matériau conducteur électrique ou des conduits de fluide chaud, positionnés au niveau de la face extérieure F32 de la paroi aérodynamique 32 ou à proximité de cette dernière.

Le deuxième système de dégivrage 70 est configuré pour occuper un état désactivé dans lequel il ne génère aucun échauffement ainsi qu'un état activé dans lequel il génère au moins un échauffement localisé. Dans le cas d'un deuxième système de dégivrage 70 de type électrique, il est configuré pour occuper un état activé dans lequel les bandes en matériau conducteur électrique 70.1 à 70.4 ne génèrent aucun échauffement et un état activé dans lequel les bandes en matériau conducteur électrique 70.1 à 70.4 génèrent un échauffement. A cet effet, le système de dégivrage de type électrique 70 comprend au moins une deuxième commande configurée pour piloter un changement d'état parmi les états activé et désactivé. En variante, le deuxième système de dégivrage 70 peut être en permanence à l'état activé Selon un mode de réalisation, les éléments longilignes chauffants 70.1, 70.2 sont orientés selon au moins une première direction sensiblement parallèle à la direction transversale (perpendiculaire à la direction longitudinale du flux d'air).

Selon un premier agencement, le bord d'attaque 36 équipé du dispositif de dégivrage 66 comprend une ligne de crête C correspondant à la ligne positionnée le plus en avant de la surface aérodynamique 32 (les notions avant/arrière faisant référence au sens d'écoulement du flux d'air qui s'écoule de l'avant vers l'arrière). Dans ce cas, le premier système de dégivrage 68 comprend plusieurs générateurs de déformation élastique 68.1 répartis sur la ligne de crête C ainsi qu'au moins deux éléments longilignes chauffants 70.1, 70.2 orientés selon la première direction et positionnés de part et d'autre de la ligne de crête C. Ainsi, chaque premier système de dégivrage 68 est positionné entre deux éléments longilignes chauffants 70.1, 70.2 orientés selon la première direction.

Selon un deuxième agencement visible sur la figure 3, le deuxième système de dégivrage 70 comprend des premiers éléments longilignes chauffants 70.1, 70.2 orientés selon la première direction ainsi que des deuxièmes éléments longilignes chauffants 70.3, 70.4 orientés selon au moins une deuxième direction sécante à la première direction, notamment perpendiculaire à la première direction, les premiers et deuxièmes éléments longilignes chauffants 70.1 à 70.4 étant sécants. Selon ce deuxième agencement, chaque générateur de déformation élastique 68.1 du premier système de dégivrage 68 est positionné entre deux premiers éléments longilignes chauffants 70.1, 70.2 orientée selon la première direction et entre deux deuxièmes éléments longilignes chauffants 70.3, 70.4.

Selon un mode de réalisation, les éléments longilignes chauffants 70.1 à 70.4 présentent chacun une largeur donnée, de l'ordre de 1 à 5 cm, et sont espacés entre eux d'une distance supérieure à 5 fois la largeur donnée.

Bien entendu, l'invention n'est pas limitée à ces modes de réalisation pour les premier et deuxième systèmes de dégivrage 68, 70. Quel que soit le mode de réalisation, le deuxième système de dégivrage 70 est configuré pour segmenter l'amas de glace 34 en le divisant en petits blocs de glace et le premier système de dégivrage 68 est configuré pour décoller ces petits blocs de glace de la paroi aérodynamique 32. Ainsi, le deuxième système de dégivrage 70 permet d'optimiser le fonctionnement du premier système de dégivrage 68. Selon un agencement, chaque deuxième système de dégivrage 70 est discontinu (et ne recouvre pas toute la surface à traiter) et décalé sur la paroi aérodynamique 32 par rapport au premier système de dégivrage 68. Selon une configuration, le premier système de dégivrage 68 comprend plusieurs générateurs de déformation élastique 68.1 répartis selon au moins une ligne positionnée dans un plan sensiblement perpendiculaire au flux d'air qui s'écoule sur la face extérieure F32 de la paroi aérodynamique 32. Dans le cas d'un bord d'attaque, cette ligne d'implantation des générateurs de déformation élastique 68.1 correspond à la ligne de crête (C). Selon une configuration, chaque générateur de déformation élastique 68.1 est positionné entre au moins deux éléments longilignes chauffants 70.1 à 70.4, sensiblement à équidistance desdits éléments longilignes chauffants 70.1 à 70.4.

L'invention a également pour objet un procédé de dégivrage de la paroi aérodynamique 32 utilisant au moins un premier système de dégivrage 68 configuré pour occuper un état activé dans lequel il génère au moins une déformation élastique de la paroi aérodynamique 32 et un état désactivé dans lequel il ne génère aucune déformation élastique ainsi qu'au moins un deuxième système de dégivrage 70, différent du premier système de dégivrage 68, configuré pour occuper un état activé dans lequel il génère au moins un échauffement localisé au niveau de la face extérieure F32 de la paroi aérodynamique et un état désactivé dans lequel il ne génère aucun échauffement. Le procédé de dégivrage comprend une étape d'activation du deuxième système de dégivrage 70 visant à commuter le deuxième système de dégivrage de l'état désactivé à l'état activé et une étape d'activation du premier système de dégivrage 68 visant à commuter le premier système de dégivrage 68 de l'état désactivé à l'état activé.

Le fait d'activer le deuxième système de dégivrage 70 permet d'affaiblir l'amas de glace 34 en le segmentant en plusieurs petits blocs, ce qui contribue à renforcer l'efficacité du premier système de dégivrage 68. Cette solution contribue à réduire la consommation énergétique du dispositif de dégivrage, chacun des premier et deuxième systèmes de dégivrage fonctionnant de manière optimisée.

Selon un mode opératoire, l'étape d'activation du premier système de dégivrage 68 est décalée dans le temps d'une durée d'au moins 2 secondes par rapport à l'étape d'activation du deuxième système de dégivrage 70.

Le premier système de dégivrage 68 est à l'état activé pendant une durée très courte, inférieure à 2 secondes voire de l'ordre d'une fraction de seconde.

Le deuxième système de dégivrage 70 présente un mode de fonctionnement plus long, supérieur à 2 secondes. Ainsi, le procédé de dégivrage comprend une étape de désactivation du deuxième système de dégivrage 70 concomitante à l'étape d'activation du premier système de dégivrage 68.

Selon un autre mode opératoire, l'étape d'activation du deuxième système de dégivrage 70 est concomitante à l'étape d'activation du premier système de dégivrage 68.

En fonctionnement, les deuxièmes systèmes de dégivrage 70 sont commutés à l'état activé de manière à provoquer un échauffement au droit de chaque élément longiligne chauffant 70.1 à 70.4, comme illustré sur la partie (A) de la figure 4. Les éléments longilignes chauffants 70.1 à 70.4 ne couvrant pas toute la surface à traiter mais au plus 20% de cette surface de manière discontinue, les deuxièmes systèmes de dégivrage 70 ont une consommation énergétique nettement inférieure à celle d'un tapis résistif de l'art antérieur recouvrant de manière continue toute la surface à traiter.

Après un délai réduit, l'amas de glace 34 est fragilisé au droit des éléments longilignes chauffants 70.1 à 70.4 et comprend des zones d'épaisseur réduite 74 au droit de ces derniers. Après l'actionnement du deuxième système de dégivrage 70, l'amas de glace 34 ne forme plus un seul gros bloc compact. Il est segmenté en plusieurs petits blocs de glace plus facile à décoller. Le premier système de dégivrage 68 est alors commuté à l'état activé. Contrairement à l'art antérieur, l'amas de glace 34 étant déjà fragilisé au droit des éléments longilignes chauffants 70.1 à 70.4, l'action des premiers systèmes de dégivrage 68 nécessite moins d'énergie par rapport à l'art antérieur pour décoller l'amas de glace 34. Selon un autre avantage, lorsque les éléments longilignes chauffants 70.1, 70.2 sont orientées perpendiculairement au flux d'air, les zones d'épaisseur réduite 74 offrent une prise au vent pour le flux d'air, ce qui favorise le décollement des blocs de glace.

## Revendications

1. Procédé de dégivrage d'une paroi aérodynamique (32) d'un aéronef, ladite paroi aérodynamique (32) présentant une face extérieure (F32) contre laquelle peut s'écouler un flux d'air selon une direction longitudinale ainsi qu'une face intérieure (F32') opposée à la face extérieure (F32), **caractérisé en ce que** le procédé utilise au moins un premier système de dégivrage (68) configuré pour occuper un état activé dans lequel le premier système de dégivrage (68) génère au moins une déformation élastique de la paroi aérodynamique (32) ainsi qu'au moins un deuxième système de dégivrage (70), différent du premier système de dégivrage (68), configuré pour occuper un état activé dans lequel le deuxième système de dégivrage (70) génère au moins un échauffement localisé au niveau de la face extérieure (F32) de la paroi aérodynamique (32), le procédé de dégivrage comprenant une étape d'activation du deuxième système de dégivrage (70) et une étape d'activation du premier système de dégivrage (68).

2. Procédé de dégivrage selon la revendication précédente, **caractérisé en ce que** l'étape d'activation du premier système de dégivrage (68) est décalée dans le temps d'une durée d'au moins 2 secondes par rapport à l'étape d'activation du deuxième système de dégivrage (70).

3. Procédé de dégivrage selon la revendication 1, **caractérisé en ce que** l'étape d'activation du deuxième système de dégivrage (70) est concomitante à l'étape d'activation du premier système de dégivrage (68).

4. Procédé de dégivrage selon l'une des revendications précédentes, **caractérisé en ce que** le procédé de dégivrage comprend une étape de désactivation du deuxième système de dégivrage (70) concomitante à l'étape d'activation du premier système de dégivrage (68).

5. Aéronef comprenant une paroi aérodynamique (32) ainsi qu'un dispositif de dégivrage (66) pour traiter ladite paroi aérodynamique (32), cette dernière présentant une face extérieure (F32) contre laquelle peut s'écouler un flux d'air selon une direction longitudinale ainsi qu'une face intérieure (F32') opposée à la face extérieure (F32), le dispositif de dégivrage (66) comprenant au moins un premier système de dégivrage (68) configuré pour générer au moins une déformation élastique de ladite paroi aérodynamique (32), **caractérisé en ce que** le dispositif de dégivrage (66) comprend au moins un deuxième système de dégivrage (70), différent du premier système de dégivrage (68), configuré pour générer un échauffement localisé au niveau de la face extérieure (F32) de la paroi aérodynamique (32).

6. Aéronef selon la revendication précédente, **caractérisé en ce que** le deuxième système de dégivrage (70) est discontinu et décalé sur la paroi aérodynamique (32) par rapport au premier système de dégivrage (68).

7. Aéronef selon la revendication précédente, **caractérisé en ce que** le deuxième système de dégivrage (70) comprend plusieurs éléments longilignes chauffants (70.1 à 70.4) positionnés au niveau de la face extérieure (F32) de la paroi aérodynamique (32) ou à proximité de cette dernière.

8. Aéronef selon la revendication précédente, **caractérisé en ce que** le deuxième système de dégivrage (70) comprend des premiers éléments longilignes chauffants (70.1, 70.2) orientés selon au moins une première direction sensiblement perpendiculaire à la direction longitudinale du flux d'air.

9. Aéronef selon la revendication précédente, **caractérisé en ce que** le deuxième système de dégivrage (70) comprend des deuxièmes éléments longilignes chauffants (70.3, 70.4) orientés selon au moins une deuxième direction sécante à la première direction, les premiers et deuxièmes éléments longilignes chauffants (70.1 à 70.4) étant sécants.

10. Aéronef selon la revendication précédente, **caractérisé en ce que** la deuxième direction est sensiblement perpendiculaire à la première direction.

11. Aéronef selon l'une des revendications 7 à 10, **caractérisé en ce que** les éléments longilignes chauffants (70.1 à 70.4) présentent chacun une largeur donnée et sont espacés entre eux d'une distance supérieure à 5 fois la largeur donnée.

12. Aéronef selon l'une des revendications 7 à 11, **caractérisé en ce que** le premier système de dégivrage (68) comprend plusieurs générateurs de déformation élastique (68.1) positionnés chacun entre au moins deux éléments longilignes chauffants (70.1 à 70.4).

13. Aéronef selon la revendication précédente, **caractérisé en ce que** chaque générateur de déformation élastique (68.1) est positionné entre deux premiers éléments longilignes chauffants (70.1, 70.2) orientés selon une première direction et entre deux deuxièmes éléments longilignes chauffants (70.3, 70.4) orientés selon une deuxième direction sécante à la première direction.

14. Aéronef selon l'une des revendications 7 à 13, **caractérisé en ce que** l'aéronef comprend au moins un bord d'attaque présentant une ligne de crête (C), **en ce que** le premier système de dégivrage (68) comprend plusieurs générateurs de déformation élastique (68.1) répartis le long de la ligne de crête (C) et **en ce que** le deuxième système de dégivrage (70) comprend au moins deux premiers éléments longilignes chauffants (70.1, 70.2) orientés selon au moins une première direction, sensiblement perpendiculaire à la direction longitudinale du flux d'air, et positionnés de part et d'autre de la ligne de crête (C).
